# EUROPEAN PATENT APPLICATION

(11) **EP 4 831 313 A1**
(43) Date of publication of application: **28.10.2026**
(21) Application number: 25171601.5
(22) Date of filing: 22.04.2025
(51) Int. Cl.: C22B 3/44, C22B 7/00, C22B 1/00, C02F 9/00, C22B 3/00, C22B 26/12, C22B 47/00, H01M 10/54, C22B 3/04, C22B 3/06, C22B 15/00

(54) **OXIDATIVE REMOVAL OF ORGANIC COMPOUNDS FROM LI-ION BATTERY BLACK MASS LEACH SOLUTION**

(71) Applicant: Metso Finland Oy, 02230 Espoo (FI)
(72) Inventor: CHERNYAEV, Alexander, 02230 Espoo (FI)
(74) Representative: Laine IP Oy

(57) **Abstract**

The present invention concerns a method that integrates removal of organic compounds in a process for hydrometallurgical recovery of metals from spent Li-ion batteries. The method comprises leaching a black mass concentrate derived from spent Li-batteries in a leach solution and subjecting the obtained leach solution to an oxidizing reaction by addition of hydrogen peroxide and an iron reagent. The method further comprises recovering metals from the leach solution that has been subjected to the oxidizing reaction.

## Description

### FIELD

The present invention concerns a method including removal of organic compounds in the hydrometallurgical recovery of metals from spent Li-ion batteries. In particular, the invention concerns a method including removal of organic compounds from black mass leach solutions prior to subsequent recovery of battery metals.

### BACKGROUND

Energy storage devices have a central position in our every-day life and in our infrastructure. Currently, such energy storage solutions heavily rely on rechargeable batteries that contain battery metals. In particular lithium-ion (Li-ion) batteries have gained a stable position in our society through a wide use ranging from consumer electronics to grid-scale energy storage.

There are different types of Li-ion batteries, which all employ lithium (Li) compounds as cathode materials. Such cathode materials can contain other valuable battery metals as well, such as, nickel (Ni), cobalt (Co), and manganese (Mn). The widespread use of Li-ion batteries has increased the demand for said metals, the natural resources of which are limited. Thus, beside efficient recovery from primary natural resources, recovery of metals from secondary resources, such as spent batteries, is of high importance.

Hydrometallurgical separation of metals from spent batteries typically proceeds via the recovery from black mass, which contains cathode active material and anode material, but from which wiring and other coarse solid battery components, such as plastic or steel parts, have already been removed. The next step is typically the separation of the cathode active material from the other components of the black mass, e.g. using mechanical, thermal and/or chemical pre-treatment steps, followed by acid leaching to solubilize the cathode active material, and prepare them for recovery.

One challenge in the recycling of black mass originating from Li-ion batteries is that Li-batteries contain organic solvents, which typically causes contamination in the recycling process. In particular when hydrometallurgical processes are used, such as solvent extraction processes, the organic content of Li-ion batteries tend to cause negative effects or to accumulate in the process, unless properly removed prior to the hydrometallurgical treatment steps.

Organic solvents can be decomposed or evaporated thermally, whereby the dominating method for solvent removal currently is heat treatment of the black mass. Typically, temperatures over 300°C are used, and up to 99% of organic solvents can be removed. This, however, increases the energy-demand of the process and adds the need for a separate heat treatment unit that not otherwise would be necessary. There is thus a need for alternative methods to remove organic content in the battery recycling process and that can be integrated therein.

### SUMMARY OF THE INVENTION

The present invention aims at solving at least some of the problems of the prior art. Thus, the present invention concerns a method including removal of organic compounds in hydrometallurgical recovery of metals from spent Li-ion batteries, the method comprising:
- a leaching step comprising leaching a black mass concentrate derived from spent Li-batteries in a leach solution, whereby a solid leach residue and a pregnant leach solution is obtained,
- an organics removal step comprising subjecting the pregnant leach solution obtained in the leaching step to an oxidizing reaction by addition of hydrogen peroxide and an iron reagent, and
- a recovery step comprising recovering metals from the pregnant leach solution that has been subjected to the organics removal step.

The advantages obtained using the present invention include early removal of organic compounds by an organics removal step, i.e., an oxidation step, that is integrated into the hydrometallurgical recovery process. The oxidizing reaction of the method of the present invention employs a Fenton-type reaction to decompose organic compounds and to thus reduce the total organic carbon of the leach solution to be processed. Iron precipitate, in particular iron oxides, as well as carbon dioxide and oxygen gas are formed in the oxidizing reaction.

The above-described process connection is beneficial in particular in the hydrometallurgical recovery of metals from spent Li-ion batteries, that typically contain organic solvents, or organic electrolytes. If the organic compounds are not removed by pretreating the black mass or by purification of the pregnant leach solution, the organic compounds tend to interfere in the metal recovery process. This is in particular the case when solvent extraction is used in the battery metal recovery, but also in other processes used for the recovery of battery metals, such as recovery by precipitation. The early removal of organic compounds reduces the need for further purification step.

One benefit of the integration of an organics removal step that relies on a Fenton-type oxidizing reaction is that the reaction itself does not introduce new reagents. The reaction employs hydrogen peroxide and iron reagent, such as ferrous sulphate, to carry out the oxidation. These reagents contain the same ions that typically already are present in the leach solution, thereby not adding to the complexity of the process. Furthermore, and in particular when the leaching step is carried out under acidic conditions, there is no need for additional pH adjustment, as the oxidizing reaction is carried out at a pH that is between the acidic leaching pH and neutral pH. This contributes to efficient use of chemicals in the process.

Among others, the invention reduces or eliminates the need for decomposition of organic compounds by thermal pre-treatment of black mass, or alternative methods. With the method of the present invention, the organics removal can be directly integrated in hydrometallurgical processes.

### BRIEF DESCRIPTION OF THE DRAWINGS

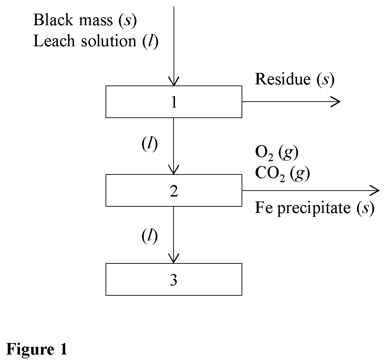

FIGURE 1 illustrates a process configuration in accordance with at least some embodiments of the present invention, with block 1 representing the leaching step, block 2 representing the organics removal step, and block 3 representing the recovery step. The feeds of solid black mass concentrate and liquid leach solution, the separation of solid leach residue and processing of the liquid leach solution, as well as the separation of iron precipitate and leach solution treated in the oxidizing reaction are illustrated with arrows.

### EMBODIMENTS

### Definitions

"Total organic carbon" (TOC) is a measure representing the total concentration of organic compounds in a solution. The TOC can be determined by the standard SFS-EN 1484:1997. In this method, a TOC analyzer is used, which measures total carbon (TC) and inorganic carbon (IC). The TOC is determined as the difference between TC and IC. TC is measured by burning the injected sample in a combustion tube and the resulting carbon dioxide is measured by a non-dispersive infrared (NDIR) analyzer. IC is measured by acidifying the injected sample and the resulting carbon dioxide is measured by NDIR analyzer. The TC and IC channels have external calibrations against which the sample is determined.

Black mass concentrate, as used herein, refers to processed or unprocessed black mass derived from spent batteries. Black mass contains cathode active material and anode material from which wiring and other coarse solid battery components has been removed. Thereby, the black mass concentrate typically has undergone at least mechanical processing. The term black mass concentrate also include black mass from which anode material has been removed at least partially, forming a black mass rich in cathode active material (CAM).

Battery metals refer to valuable metals that typically are present in the black mass, in particular metals contained in the cathode active material. Such metals are lithium, nickel, cobalt, and manganese, which typically are used in cathodes in the form of oxides, as well as copper. In the context of the present disclosure, the recovery of metals primarily refers to the recovery of such battery metals.

The present invention concerns a method including removal of organic compounds in hydrometallurgical recovery of metals from spent Li-ion batteries, the method comprising:
- a leaching step 1 comprising leaching a black mass concentrate in a leach solution, whereby a solid leach residue and a pregnant leach solution is obtained,
- an organics removal step 2 comprising subjecting the pregnant leach solution obtained in the leaching step to an oxidizing reaction by addition of hydrogen peroxide and an iron reagent, and
- a recovery step 3 comprising recovering metals from the pregnant leach solution that has been subjected to the organics removal step 2.

The above-described method has the advantage of removal of organic compounds early in the hydrometallurgical process. This prevents build-up of organic compounds in the process and minimizes interference thereof in the metal recovery. Additionally, the method can be integrated in existing processes without introduction of new chemicals thereto, that is, reagents that would need to be removed in additional process steps. This can eliminate the need to employ heat pre-treatment of the black mass, which in turn simplifies the process and makes it more energy efficient when compared to current processes.

In particular Li-ion batteries commonly contain organic solvents or electrolytes, leaving organic residues in the black mass obtained in the recycling of spent Li-ion batteries. This makes the process of the present disclosure especially suitable for hydrometallurgical recovery of metals from black mass derived from Li-ion batteries. Thus, in preferred embodiments, the leaching step 1 comprises leaching a black mass concentrate derived from spent Li-ion batteries, or containing a black mass concentrate derived from spent Li-ion batteries.

The black mass concentrate can be processed mechanically, chemically, and/or thermally prior to the leaching step. In some embodiments of the present disclosure, the black mass concentrate is only processed mechanically prior to the leching step. Alternatively, or additionally, the black mass concentrate can be processed chemically. In further some embodiments, any thermal processing of the black mass has been carried out at temperatures up to 300°C, such as up to 150°C, 200°C, 250°C, or 300°C. Thus, the black mass concentrate has in some embodiments not been subjected to a heat treatment step for removal of organic compounds, or such a heat treatment step has only partially removed organic compounds from the black mass. In particular heat treatment at temperatures above 300°C typically degrades organic compounds within the black mass concentrate, and functions as step for removal of organic solvents. From an energy consumption perspective, and also with respect to the complexity of the apparatus, omitting such a heat treatment step or carrying out the heat treatment at relatively low temperatures, such as below 300°C, can be beneficial. It should, however, be noted that the method of the present disclosure is not limited to certain types of black mass concentrates, as it can be used alone or as a complementary method for removal of organic solvents, or other organic compounds, from black mass leach solutions. That is, regardless of any pretreatments carried out on the black mass prior to leaching.

The method of the present disclosure relies on the inclusion of an organics removal step 2 including a Fenton-type oxidizing reaction. The oxidizing reaction is carried out by adding hydrogen peroxide and an iron reagent to decompose organic compounds. The hydrogen peroxide and the iron reagent react by forming radicals that in turn initiates a reaction with organic compounds present in the pregnant leach solution, forming mainly carbon dioxide and oxygen gas as well as iron oxide precipitate. The Fenton-type oxidizing reaction is presented in Reaction 1 for ferrous (Fe²⁺) reagents and in Reaction 2 for ferric (Fe³⁺) reagents.

Reaction 1: Fe²⁺ + H₂O₂ → Fe³⁺ + •OH + OH⁻

Reaction 2: Fe³⁺ +H₂O₂ → Fe²⁺ + HO₂• + H⁺

The iron reagent used in the organics removal step 2 can be an iron reagent forming ferrous or ferric ions in solution, such as a ferrous salt, a ferric salt, or a combination thereof. The iron reagent can be added in solid form or in solution.

In the oxidizing reaction, organic compounds present in the pregnant leach are decomposed, releasing carbon dioxide (CO₂) and oxygen (O₂) gas. The total organic carbon in the solution can be reduced by 80-95 %, in the organics removal step 2.

The aforementioned organics removal step is carried out prior to a recovery step 3 wherein metals are recovered from the pregnant leach solution. By carrying out the organics removal step 2 prior to the recovery step 3, it is possible to minimize the interference and accumulation of organic compounds in the recovery process.

The leaching step 1 can be carried out using an aqueous leach solution. The leach solution can be water, optionally containing reagents such as acids or hydrogen peroxide.

In some embodiments, the leaching step 1 comprises leaching the black mass concentrate in water at a pH of 4-12, preferably 6-7. Thus, the pH of the leach solution can be neutral, such as in the range of 6-7, or slightly acidic or alkaline, such as in the range of 4-12. A neutral pH range is typically employed in water leaching. Within this context, a washing step can also be considered as water leaching, provided that metal ions are at least partially transferred to the wash water. In further some embodiments, the leaching step 1 comprises leaching the black mass concentrate in an acidic leach solution, preferably a leach solution containing sulfuric acid. The pH of the acidic leach solution, can be 0.1-3.0, in particular1.5-2.

In the leaching step 1 metal ions are transferred into the leach solution, thus producing a pregnant leach solution that is rich in metal ions, in particular battery metal ions such as Al³⁺, Li⁺, Ni²⁺, Co²⁺, Mn²⁺, as well as a solid leach residue as by product. The pregnant leach solution can be separated from the solid leach residue by solid-liquid separation. In addition to metal ions, also organic compounds are transferred to the leach solution from the black mass. These contribute to an increased total organic carbon, that cause difficulties in the hydrometallurgical recovery process. Within the present disclosure, the pregnant leach solution refers to the leach solution obtained from the leaching step 1, and that thereafter optionally has been subjected to further purification steps, or which has been subjected to the recovery step for removal of one or more metals, in particular battery metals, contained therein. Naturally, the composition of the pregnant leach solution can differ depending on the leaching conditions. When water leaching is used, the pregnant leach solution is typically rich in Li⁺, F⁻, and TOC. In acid leaching, most of the metals present in the black mass are transferred to the leach solution during the leaching step 1, forming a pregnant leach solution containing, for example, Al³⁺, Li⁺, Ni²⁺, Co²⁺, Mn²⁺, and TOC.

According to some embodiments of the above-described method, the leaching step 1 comprises leaching the black mass concentrate in an acidic leach solution, preferably a leach solution containing sulfuric acid. Acidic leaching solutions are commonly used in hydrometallurgical recovery of metals from black mass. In the method of the present invention, the organics removal step 2 is most potent at acidic pH, whereby leaching under acidic conditions reduces the need for separate acidification of the solution, simultaneously providing for efficient leaching conditions. Sulfuric acid (H₂SO₄) is a commonly used acid in acid leaching of black mass, and it is suitable for use in the method as described herein. Other alternative acids that can be used are hydrochloric acid (HCL), nitric acid (HNO₃), and phosphoric acid (H₃PO₄).

Before adding the hydrogen peroxide and iron reagent into the pregnant leach solution, it is beneficial to adjust the pH thereof. The pH of the solution affects both how efficient the oxidizing reaction is for removal of organic compound, and also the precipitation rate of metal salts from solution. Furthermore, in the Fenton-type reaction, some acid is consumed, whereby it can be beneficial to adjust the pH also during the organics removal step 2. The pH adjustment can be carried out with common bases and acids. Sodium hydroxide (NaOH), potassium hydroxide (KOH), and lithium hydroxide (LiOH) are examples of common bases used in hydrometallurgical processes, while sulfuric acid (H₂SO₄) is commonly employed as acid. It should, however, be noted that the process is not limited to acids and bases named herein.

When the black mass is leached in water, at a pH of 6-7, the pH can be lowered for the oxidizing reaction to a desired range by addition of acid, in particular H₂SO₄. On the other hand, when acid leaching has been employed, the pH can be adjusted upwards by addition of a base, such as NaOH.

In some embodiments of the method of the present disclosure, the oxidizing reaction is carried out at pH 2.2-3.3, preferably pH 2.8-3.1. Thereby, the pH can be, for example, from 2.2, 2.3, 2.4, 2.5, 2.6, 2.7, or 2.8 and up to 3.1, 3.2, or 3.3. Such pH ranges are optimal for the oxidizing reaction of the method of the present disclosure. At a pH below 2.5, the reaction is not as efficient as at higher pH, such as within the optimal range of 2.8-3.1. On the other hand, when the pH is higher, more iron oxide precipitate will be formed. This will decompose hydrogen peroxide, which causes loss in reagents. Furthermore, at higher pH the risk for formation of other metal precipitates increases, which negatively affects the oxidizing reaction or the recovery step 3, or both, unless the precipitation is carried out selectively for the metals. Conventional precipitation processes typically take place at a pH in the range of from 3.0 or 3.5 to 8, with metals such as iron, aluminum, and nickel starting to form precipitates at the lower end of said range, at a pH of 3.0-5.0, in particular 3.5-5.0.

The above-mentioned pH range for the oxidizing reaction is specific for the method of the present disclosure, integrating removal of organic compounds into the hydrometallurgical process. Pregnant leach solutions have high metal content and, in the case of leach solutions obtained in the processing of black mass from Li-ion batteries, also high TOC content. This makes the Fenton-reaction different from traditional applications thereof, such as in treatment of waste-water in pharmaceutical and mineral industries, where the concentration of metal ions and organic solvents in solution is much lower than in black mass leach solutions, and wherein there is no or low risk for precipitation of oher metals, such as aluminum and nickel.

In some embodiments of the present disclosure, the method comprises a step of precipitating at least one of iron and aluminum from the solution obtained from the organics removal step 2, prior to carrying out the recovery step 3. Thus, the step comprises precipitation of aluminum, unreacted iron, or both iron and aluminum prior to transferring the oxidized leach solution to the recovery step 3. The step of precipitating iron and aluminum from the solution can be carried out at a pH of 3-5, preferably 3.5-5. The inclusion of a purification step wherein iron and aluminum compounds are precipitated after the organics removal step 2 is beneficial for the further process, as the amount of interfering ions are reduced prior to the recovery of battery metals. This step includes pH adjustment, which can be carried out by adding common bases and acids. It is preferred to use bases and acids already employed earlier in the process, as no new components thus are added. To increase the pH to the above-mentioned range, hydroxides, such as NaOH, can be added whereby iron hydroxide and aluminum hydroxide precipitates are formed. These can then be removed by solid liquid separation.

In some embodiments of the method of the present disclosure, the recovery step 3 comprises solvent extraction or precipitation.

In preferred embodiments, the recovery step 3 comprises solvent extraction. The early removal of organic compounds is of particular importance when the metal recovery includes solvent extraction, as the organic compounds present otherwise tend to build-up in the organic phase of the solvent extraction system, both causing loss of efficiency in the extraction process and contamination thereof. This in turn increases the need for additional solvent washing steps, which directly affects the costs and the consumption of solvents and freshwater in the process. In the recovery of metals from Li-ion battery black mass, there is commonly a need to besides lithium also recover other metals present in the cathode material. Such metals can be manganese, nickel, cobalt, and copper. Solvent extraction is a very potent method for the separation and recovery of said metals. Commonly, such processes include subsequent solvent extraction steps employing different solvents, which further increases the need for removal of organic compounds present in the black mass concentrate.

Alternatively, or additionally, the recovery step 3 comprises precipitation, such as precursor precipitation. Valuable metals can be recovered from the pregnant leach solution by selective precipitation, or by co-precipitation of said metals in the form of their reaction products, such as metal salts or oxides.

In the method of the present disclosure, solvent extraction and precipitation can be employed independently of each other. That is, the recovery step 3 can include solvent extraction as the sole recovery method, or precipitation as the sole recovery method, but these can also be used as complements to each other. Furthermore, additional recovery and purification steps known in the art can be employed, such as ion exchange.

In some embodiments of the method of the present disclosure, the recovery step 3 comprises recovery of one or more of manganese, nickel, cobalt, and copper, preferably by solvent extraction or by precipitation. Solvent extraction can be employed in the recovery step 3 to recover one or more, such as one, two, three or four of said elements from the pregnant leach solution that has been treated in the organics removal step 2. The metals to recover by solvent extraction can be selected independently of each other from said list. Commonly, at least manganese and copper are recovered by solvent extraction. Depending on the concentration of the metals present, complementary recovery methods, such as ion exchange, can be used in combination with solvent extraction.

In further some embodiments, the recovery of manganese, nickel, cobalt, or copper can be carried out by precipitation. The precipitate can in such processes be recovered from solution by solid-liquid separation. A beneficial embodiment employs precursor precipitation in the recovery step. In such embodiments, precursors for cathode active materials (pCAMs) can be recovered by selective precipitation or co-precipitation. Thereby, the precursor precipitation can include, for example, precipitation of NCM precursors. The removal of organic compounds, or residual amounts of organic compounds, prior to such precursor precipitation processes improves the purity of the obtained precursors, such as pCAMs.

The method of the present disclosure is suitable for removal of organic substances at both low concentrations, such as total organic carbon (TOC) content below 3 g/l, and high concentrations, such as TOC content of 10 g/l or more. Since the method can be integrated in a hydrometallurgical process, it is also well suited as a complementary method for removal of residual organic compounds present in the leaching solution. In such embodiments, the TOC content can be below 3 g/l, such as below 1 g/l, or 0.5 g/l.

In some embodiments of the method of the present disclosure, the total organic carbon (TOC) content of the pregnant leach solution is up to 15 g/l, or up to 12 g/l. The method of the present disclosure is suitable for the processing of Li-battery black mass leach solutions having high organic content, such as an organic content up to 15 g/l, 12 g/l, or up to 10 g/l, without being limited thereto. The content of organic compounds in the pregnant leach solution will affect the consumption of hydrogen peroxide and the reaction time, such that the time and amount of reagent needed will increase with increased content of organic compounds.

In some embodiments of the method of the present disclosure, the total organic carbon (TOC) content of the pregnant leach solution is at least 0.5 g/l, at least 1 g/l, at least 3 g/l, or at least 5 g/l. Thereby, the TOC content of the pregnant leach solution can be, for example, at least 3 g/l, 5 g/l, or 7 g/l, without being limited thereto. A TOC content of more than 3 g/l is typical for pregnant leach solutions obtained from black mass that is derived from Li-ion batteries. One benefit of the method of the present invention is that it is suitable for the treatment of pregnant leach solutions, wherein the black mass has not undergone any previous solvent removal step.

In further some embodiments of the present disclosure, the TOC content of the pregnant leach solution is from 0.5 g/l, 1 g/l, 3 g/l, 5 g/l, or 7 g/l up to 10 g/l, 12 g/l, or 15 g/l. In this context, it should be noted that the method also can be used in the removal of organic compounds outside of said range. Tests have shown that with the method of the present disclosure, the TOC content can be reduced with 80-95 % from the original TOC content. The final TOC concentration of the pregnant leach solution obtained after the organics removal step 2 can have a TOC content of, for example, less than 0.5 g/l, such as less than 0.3 g/l, less than 0.2 g/l, or less than 0.1 g/l. In particular when solvent extraction is employed in the recovery step 3, TOC contents this low is desired.

The TOC content can in the above embodiments be measured according to standard SFS-EN 1484:1997.

In some embodiments of the method of the present disclosure, the black mass concentrate contains black mass derived from batteries comprising oxides of lithium and one or more metal selected from nickel, manganese, and cobalt. Black mass obtained in the recycling of Li-ion batteries commonly contains a mix of lithium and one or more of said metals. These can all be selectively recovered in a recovery step 3 employing solvent extraction and/or precipitation, whereby removal of organic compounds from the leach solution is beneficial. Thereby, the black mass concentrate can contain oxides of lithium and one, two, or three other metals that independently of each other are selected from nickel, manganese, and cobalt.

In some embodiments of the method of the present disclosure, the black mass concentrate contains black mass derived from batteries comprising one or more of lithium cobalt oxide, lithium manganese oxide, and lithium nickel manganese cobalt oxide. Such oxides can be, for example, lithium cobalt oxide (LiCoO₂), lithium manganese oxide (LiMn₂O₄, or Li₂MnO₃), or lithium nickel manganese cobalt oxide (LiNiMnCoO₂, also abbreviated NMC). These are all common types of Li-ion battery cathode materials that can be recycled in hydrometallurgical processes, in particular hydrometallurgical processes wherein the recovery step 3 comprises solvent extraction. In some embodiments, the black mass is derived from NMC type batteries, which commonly are recycled using solvent extraction. The processing of black mass derived from said battery types are more beneficial than, for example, processing of iron phosphate batteries (LiFePO₄, also abbreviated LFP), which contains iron that in excessive amounts tend to increase the formation of iron precipitate and thus also the hydrogen peroxide consumption.

In some embodiments of the method of the present disclosure, wherein the hydrogen peroxide and/or iron reagent are added in portions during the organics removal step 2. In the process of the present disclosure, it is beneficial to control the iron precipitation. In the oxidizing reaction, iron oxide is formed as a precipitate. However, if iron ions are present in excess, more iron precipitate is likely to be formed which in turn causes loss in peroxide reagent. Also, the oxidation state of the iron reagent, the presence of oxidizing agent, such as H₂O₂, and the pH of the solution affects the type and amount of iron precipitate formed. The process becomes more cost efficient when the iron precipitation is minimized, that is, the iron radicals formed in the reaction are allowed to interact with the organic compounds causing decomposition thereof. One way to control the reaction is to add the reagents, or one of the reagents in portions, e.g. batchwise dosing of the reagents. Thus, the iron reagent, the hydrogen peroxide, or both the iron reagent and the hydrogen peroxide can be added in portions during the oxidizing reaction. Another way to control the precipitation rate is by pH adjustment, as the pH of the solution affects the iron precipitation, that is, both the speed of the Fenton-type reaction and also the type of iron precipitate formed. The pH of the reaction is preferably adjusted such that the formation of iron oxides, or mixtures thereof, is favored. Iron hydroxide mixtures can also be formed, in particular at higher pH and in the absence of oxidizing agent, such as in the optional step of removal of iron and aluminum that can be carried out after the organics removal. The iron precipitates, i.e., the iron oxides and iron hydroxides, can be in the form of hydrates or anhydrates, typically the iron precipitates are obtained in the form of hydrates.

In a process economics perspective, controlled precipitation is preferred. In some embodiments of the present disclosure, the organics removal step 2 includes removal of iron precipitate during the oxidizing reaction. Thus, the organics removal step 2 can include two or more solid-liquid separation steps. Preferably, such a solid-liquid separation is carried out between the addition of portions of the iron reagent, the hydrogen peroxide, or both the iron reagent and the hydrogen peroxide.

In further some embodiments of the method of the present disclosure, the molar ratio of hydrogen peroxide to iron reagent added in the organics removal step 2 is 5:1 to 20:1, such as 8:1 to 12:1. Under most conditions, the oxidizing reaction is balanced when hydrogen peroxide is added in a molar ratio that is around ten times the molar ratio of the iron reagent. That is, such a molar ratio allows for an efficient reaction still avoiding unreacted reagents to build up in solution. It should, however, be noted that the molar ratio of hydrogen peroxide to iron is not limited to said ranges, as the amount of reagents needed are affected by the reaction time and the TOC concentration. The proportions can thereby be adjusted outside of said ranges depending on the reaction conditions.

In some embodiments of the method of the present disclosure, the iron reagent is a ferrous reagent, preferably ferrous sulphate. The iron reagent can be added in solid form or as solution. Although both ferrous (Fe²⁺) and ferric (Fe³⁺) iron reagents can be used in the method of the present disclosure, ferrous salts tend to have better solubility than ferric salts. Furthermore, the reaction is faster for ferrous salts when compared to ferric salts. Ferrous sulphate (FeSO₄) is a preferred iron reagent in the oxidizing reaction. In particular when the leach solution contains sulfuric acid, ferrous sulphate has the benefit of not adding any new anions into the process.

In some embodiments of the method of the present disclosure, the oxidizing reaction is carried out at 20-50°C, preferably 25-40°C. The reaction rate can be adjusted by adjusting the temperature. Consequently, the residence time can be shortened by increasing the temperature. On the other hand, at a temperature of 50°C and higher the efficiency of hydrogen peroxide decreases due to increased decomposition of H₂O₂ into oxygen and water. Thereby, it is beneficial to carry out the oxidizing reaction at, for example, from 20°C, 25°C, or 30°C up to 35°C, 40°C, 45°C, or 50°C. The reaction is exothermic, whereby the reaction can be energy efficiently carried out above room temperature, for example at 25-40°C, or 30-40°C.

In some embodiments of the method of the present disclosure, the oxidizing reaction is carried out for 2-5 h. A residence time of the iron reagent and the hydrogen peroxide within this range is sufficient for removal of 80-90 % of the organic compounds (TOC) from Li-ion battery black mass leach solutions under process parameters as disclosed herein.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of concentrations, temperatures, etc., to provide a thorough understanding of embodiments of the invention. One skilled in the relevant art will recognize, however, that the invention can be practiced without one or more of the specific details, or with other methods, components, materials, etc.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The following non-limiting examples are intended merely to illustrate the advantages obtained with the embodiments of the present invention.

### EXAMPLES

### Example 1

A black mass leach solution having a composition as presented in Table 1 was treated with the method of the present disclosure for removal of organic compounds present therein. The leach solution was obtained by water leaching at pH 7.

**Table 1: Composition of black mass leach solution**

| **Li** | **Na** | **Al** | **P** | **S** | **K** | **Mn** | **Fe** | **Co** | **Ni** | **Cu** | **TOC** |
|---|---|---|---|---|---|---|---|---|---|---|---|
| mg/l | mg/l | mg/l | mg/l | mg/l | mg/l | mg/l | mg/l | mg/l | mg/l | mg/l | mg/l |
| 508 | 24 | 77 | 2190 | 105 | 12 | 111 | <2 | 27 | 10 | 7 | 11200 |

In the test, 200 ml of the solution presented in Table 1 was taken for treatment with hydrogen peroxide and iron reagent. The pH of the solution was adjusted to 3.3 and maintained in a range of 2.8-3.3 during the organics removal step. The reaction was conducted at a temperature of 22°C. In the organics removal step, FeSO₄ · 7 H₂O was added as a solid salt in a total amount of 1.26 g at the initiation of the reaction. Likewise a solution of 50 wt.% H₂O₂ in water was added in 5 ml portions in a total amount of 20 ml. The H₂O₂ additions were made at the initiation of the reaction, at 20 min, at 30 min and at 2 hours. The duration of the reaction was 2 hours and the slurry was filtered two times.

Table 2 below presents the iron and TOC content before and after the above-described test. The TOC content was measured from solutions by a Shimadzu TOC-L analyzer, in accordance to standard SFS-EN 1484:1997.

**Table 2: TOC removal from black mass leach solution in a 2 h test**

| **Test time** | **Fe** | **TOC** | **TOC removal, %** |
|---|---|---|---|
| | mg/l | mg/l | |
| Before test (0 h) | 0 | 11200 | |
| 1 h | | 7700 | |
| 2 h | 843 | 3400 | 71 % |

The results show that the majority of the organic compounds present in the leach solution was decomposed already at a reaction time of 2 h and with a single batch addition of iron reagent and early addition of hydrogen peroxide, even at a relatively high initial TOC content of 11.2 g/l.

### Example 2

The test as carried out in Example 1 was repeated with a different leach solution and prolonged reaction time. Furthermore, the reagents were added batchwise, such that the iron reagent was added in three portions. The composition of the leach solution treated in the test is presented in Table 3. Said leach solution was obtained by acid leaching.

**Table 3: Composition of black mass leach solution**

| **Li** | **Na** | **Al** | **P** | **S** | **K** | **Ca** | **Mn** | **Fe** | **Co** | **Ni** | **Cu** | **TOC** |
|---|---|---|---|---|---|---|---|---|---|---|---|---|
| mg/l | mg/l | mg/l | mg/l | mg/l | mg/l | mg/l | mg/l | mg/l | mg/l | mg/l | mg/l | mg/l |
| 1370 | <10 | 1440 | 207 | 12900 | <50 | 6 | 3180 | 161 | 3970 | 3570 | 1870 | 970 |

Like in Example 1, 200 ml of the leach solution was taken and treated in the organics removal step at a temperature of 22°C. A solid FeSO₄ · 7 H₂O salt was added in a total amount 1.26 g. A solution of 50 wt.% H₂O₂ in water was added in a total amount of 15 ml. The hydrogen peroxide was added in three portions equal in size and the iron reagent in two portions equal in size, at the initiation of the test and at a reaction time of 2 hours. The test was carried out for a total time of five hours and the TOC content was analyzed at 1, 2, and 5 h using a Shimadzu TOC-L analyzer, in accordance to SFS-EN 1484:1997. The slurry was filtered two times for removal of iron precipitate. The unchanged TOC content between 1 and 2 h indicate that no active iron reagent was present at said time window.

**Table 4: TOC removal from black mass leach solution in 5 h test**

| **Test time** | **Fe** | **TOC** | **TOC removal, %** |
|---|---|---|---|
| | mg/l | mg/l | |
| Before test (0 h) | 161 | 970 | |
| 1 h | 126 | 290 | |
| 2 h | 266 | 290 | |
| 5 h | 63 | 80 | 93 |

The results show good removal rates of TOC. At 1 h, and after the addition of the first portion of reagents, already 70 % of the TOC had been degraded. With the addition of further reagents and prolonged reaction time, the TOC content was further decreased, with a 93 % reduction from the initial value at five hours. Also the iron concentration was reduced from the initial concentration, indicating that iron in the leach solution is participating in the reaction.

The results show that the method of the present disclosure can be used to reduce the TOC content to levels below 0.1 g/l, which is suitable for most hydrometallurgical processes without further removal of organic compounds.

### Example 3

Two tests were conducted using slightly altered test conditions when compared to those of Example 1 and Example 2. A third test solution having high metal concentration was used, the composition of which is presented in Table 5.

**Table 5: Composition of the black mass leach solution**

| **Li** | **Na** | **Mg** | **Al** | **Si** | **P** | **S** | **K** | **Ca** | **Ti** |
|---|---|---|---|---|---|---|---|---|---|
| mg/l | mg/l | mg/l | mg/l | mg/l | mg/l | mg/l | mg/l | mg/l | mg/l |
| 2330 | 736 | 7 | 2200 | <10 | 421 | 23600 | <50 | 13 | <5 |

| **Mn** | **Fe** | **Co** | **Ni** | **Cu** | **Zn** | **Cd** | **F⁻** | **TOC** | |
|---|---|---|---|---|---|---|---|---|---|
| mg/l | mg/l | mg/l | mg/l | mg/l | mg/l | mg/l | mg/l | mg/l | |
| 5220 | 139 | 6530 | 5900 | 5070 | 45 | 2 | 658 | 1400 | |

Both tests were carried out on 200 ml solution with the above composition. The reaction temperature of the organics removal step was 30°C. The duration of the oxidizing reaction was five hours in both tests and the total amount of hydrogen peroxide added was 13.32 ml (50 wt.% H₂O₂ in water). The hydrogen peroxide was added in four portions. The iron reagent was added in differing amounts. Test 1 of Example 3 was carried out using a total amount of 2.43 g of solid FeSO₄ · 7 H₂O salt while test 2 of Example 3 was carried out using an aqueous FeSO₄ solution having a FeSO₄ · 7 H₂O concentration of 50 g/l, corresponding to a total amount of FeSO₄ · 7 H₂O of 1.22 g. Both the solid Fe reagent used in test 1 and the solution used in test 2 were added in three portions. The reaction time was 5 hours in both tests, and the slurry was filtered two times.

The results for the tests are shown in Table 6 and Table 7, respectively. The TOC content was measured from solutions by a Shimadzu TOC-L analyzer, in accordance to standard SFS-EN 1484:1997.

**Table 6: Results of TOC removal from black mass leach solution using solid FeSO₄ salt (Test 1)**

| **Test time** | **Fe** | **TOC** | **TOC removal, %** |
|---|---|---|---|
| | mg/l | mg/l | |
| Before test (0 h) | 139 | 1400 | |
| 20 min | - | 750 | |
| 1 h | - | 500 | |
| 2 h | 1930 | 320 | |
| 5 h | 1510 | 200 | 85 |

**Table 7: Results of TOC removal from black mass leach solution using aqueous FeSO₄ solution (Test 2)**

| **Test time** | **Fe** | **TOC** | **TOC removal, %** |
|---|---|---|---|
| | mg/l | mg/l | |
| Before test (0 h) | 139 | 1400 | |
| 1 h | - | 430 | |
| 2 h | - | 310 | |
| 5 h | - | 290 | 81 |

The results show that 80 % or more of the TOC content can be removed regardless of if the iron reagent is added in solution or in solid state. Furthermore, the test shows that low TOC content can be reached also when the pregnant leach solution has a high initial TOC content, such as 14 g/L.

### INDUSTRIAL APPLICABILITY

The method of the present disclosure can be used for removal of organic compounds in in hydrometallurgical processes for the recovery of valuable metals from spent batteries.

In particular, the present method provides a simplified and cost-efficient process, that reduces the need for thermal pre-treatment of black mass in the recovery of metals from spent Li-ion batteries.

### Reference Signs List

- 1: Leaching step
- 2: Organics removal step
- 3: Recovery step

## Claims

1. A method including removal of organic compounds in hydrometallurgical recovery of metals from spent Li-ion batteries, the method comprising:
- a leaching step (1) comprising leaching a black mass concentrate derived from spent Li-batteries in a leach solution, whereby a solid leach residue and a pregnant leach solution is obtained,
- an organics removal step (2) comprising subjecting the pregnant leach solution obtained in the leaching step (1) to an oxidizing reaction by addition of hydrogen peroxide and an iron reagent, and
- a recovery step (3) comprising recovering metals from the pregnant leach solution that has been subjected to the organics removal step (2).

2. The method according to claim 1, wherein the leaching step (1) comprises leaching the black mass concentrate in water at a pH of 4-12, preferably 6-7.

3. The method according to claim 1, wherein the leaching step (1) comprises leaching the black mass concentrate in an acidic leach solution, preferably a leach solution containing sulfuric acid.

4. The method according to any one of the preceding claims, wherein the oxidizing reaction is carried out at a pH 2.2-3.3, preferably pH 2.8-3.1.

5. The method according to any one of the preceding claims, wherein the method comprises a step of precipitating at least one of iron and aluminum from the solution obtained from the organics removal, prior to carrying out the recovery step (3).

6. The method according to any one of the preceding claims, wherein the recovery step (3) comprises solvent extraction or precipitation.

7. The method according to any one of the preceding claims, wherein the recovery step (3) comprises recovery of one or more of manganese, nickel, cobalt, and copper, preferably by solvent extraction or precipitation.

8. The method according to any one of the preceding claims, wherein the total organic carbon (TOC) content of the pregnant leach solution is up to 15 g/l, or up to 12 g/l, when measured according to SFS-EN 1484:1997.

9. The method according to any one of the preceding claims, wherein the total organic carbon (TOC) content of the pregnant leach solution is at least 0,5 g/l, such as at least 3 g/l, or at least 5 g/l, when measured according to SFS-EN 1484:1997.

10. The method according to any one of the preceding claims, wherein the black mass concentrate contains black mass derived from batteries comprising oxides of lithium and one or more of nickel, manganese, and cobalt.

11. The method according to any one of the preceding claims, wherein the black mass concentrate contains black mass derived from batteries comprising lithium cobalt oxide, lithium manganese oxide, and/or lithium nickel manganese cobalt oxide.

12. The method according to any one of the preceding claims, wherein the hydrogen peroxide and iron reagent are added in portions during the organics removal step (2).

13. The method according to any one of the preceding claims, wherein the iron reagent is a ferrous reagent, preferably ferrous sulphate.

14. The method according to any one of the preceding claims, wherein the oxidizing reaction is carried out at 20-50 °C, preferably 25-40 °C.

15. The method according to any one of the preceding claims, wherein the oxidizing reaction is carried out for 2-5 h.
